# EUROPÄISCHE PATENTSCHRIFT

(11) **EP 2 053 256 B1**
(45) Veröffentlichungstag und Bekanntmachung des Hinweises auf die Patenterteilung: **11.07.2012**
(21) Anmeldenummer: 08018273.6
(22) Anmeldetag: 18.10.2008
(51) Int. Cl.: F16B 21/18

(54) **Sprengringsicherung an einer Wellen-Naben-Verbindung**
Snap securing ring on a shaft-to-collar connection
Bague de sécurisation sur une liaison d'arbres-moyeux

(30) Priorität: 27.10.2007 DE 202007014997 U
(43) Veröffentlichungstag der Anmeldung: 29.04.2009
(73) Patentinhaber: Ifa Technologies GmbH, 39340 Haldensleben (DE)
(72) Erfinder: Patzelt, Bernd, Dr., 39108 Magdeburg (DE)
(74) Vertreter: Leinung, Günter

(56) Entgegenhaltungen:
- WO-A1-2006/080132
- FR-A1- 2 296 118
- FR-A1- 2 385 934
- JP-A- 2007 255 659
- JP-A- 2007 263 161
- US-A1- 2005 159 227

## Beschreibung

Die Erfindung betrifft eine Sprengringsicherung an einer Wellen-Naben-Verbindung, welche zur Herausbildung einer festen Verbindung von Welle und Nabe gegeneinander verschoben werden, wobei eines der Bauteile eine Bohrung aufweist, in der das andere Bauteil aufgenommen wird. Dabei sind die beiden Bauteile durch Auf- bzw. Einschieben montiert und gegen Verschieben zumindest entgegen der Auf- bzw. Einschieberichtung durch einen in einer Nut eines der Bauteile vormontierten und radial federnden Sprengring gesichert, der bei der Montage nach Erreichen einer Nut des anderen Bauteiles in diese hineinbewegt wird.

Derartige Wellen-Naben-Verbindungen werden vielfältig eingesetzt, insbesondere auch im Automobilbereich, um beispielsweise Wellen und Naben von Kardanwellen miteinander zu verbinden.

Wesentlich bei der Ausbildung derartiger Wellen-Naben-Verbindungen ist, dass diese gegen axiales Verschieben entsprechend gesichert werden und diese auch bei höheren Beanspruchungen keiner Zerstörung unterliegen bzw. die Verbindungen sich nicht lösen.

Die Probleme bei der Ausbildung und Sicherung von Wellen-Naben-Verbindungen liegen zum einen darin, dass diese Naben-Wellen-Verbindungen ohne überhöhten Kraftaufwand herausgebildet werden können und zum anderen darin, dass eine derart ausgebildete Wellen-Naben-Verbindung ausreichend den Betriebsbedingungen standhält, was bedeutet, dass der eingesetzte Sprengring zur Sicherung der Wellen-Naben-Verbindung auch hohen Betriebsbelastungen standhält und somit die Funktionsfähigkeit derartiger Wellen-Naben-Verbindungen sichert.

Eine Sprengringsicherung an einer Wellen-Naben-Verbindung, insbesondere an einer schnell drehenden oder stoßbelasteten Wellen-Naben-Verbindung ist mit der DE 25 08 677 bekannt geworden, bei der zwei Sprengringe verwendet werden, von denen ein Sprengring eine Sicherung für den anderen Sprengring gewährleisten soll, was dadurch erreicht wird, dass der erste Sprengring radial innen nur in der Wellennut und der zweite Sprengring radial außen nur in der Nabennut angeordnet ist, dies derart, dass die Wellennut so tief ausgeführt ist, dass der erste Sprengring beim Einführen des zweiten Sprengringes um die Tiefe der Nabennut in der Wellennut eintauchen kann.

Nachteilig bei dieser Lösung ist der nicht unerhebliche technische Aufwand zur Herausbildung der Sprengringsicherung, da die zum Einsatz kommenden zwei Sprengringe beim Einsetzen exakt zueinander zu positionieren sind, um die notwendige Funktionssicherheit zu erreichen bzw. zu gewährleisten.

Eine weitere Axialsicherung zweier gegeneinander verschiebbarer Bauteile ist mit der DE 40 40 337 C2 bekannt geworden, von denen eines eine Bohrung aufweist, in der das andere Bauteil aufgenommen ist, wobei die beiden Bauteile durch Auf- bzw. Einschieben montiert und gegen Verschieben zumindest entgegen der Auf- bzw. Einschieberichtung durch einen in einer Nut eines der Bauteile vormontierten und radial federnden Sprengring gesichert sind, der bei der Montage nach dem Erreichen einer Nut des anderen Bauteiles in diese hineinbewegt wird. Dabei ist die Nut, in der der Sprengring vormontiert gehalten ist, als separate Vormontage-Nut mit einer kegeligen Montagefläche gestaltet, aus der der Sprengring mit wenigstens der Hälfte seiner Dicke über die Sitzfläche der Bauteile radial zum anderen Bauteil hin hervorragt. Die vorgesehenen Klemmflächen dienen als Montageflächen und sollen das Fügen der zu verbindenden Bauteile erleichtern und gleichfalls eine Axialsicherung bewirken.

Da bei derartigen Axialsicherungen der zum Einsatz kommende Sprengring nicht geschlossen ist, sondern einen sich in Umfangsrichtung erstreckenden Spalt aufweist, kann er daher in seinem Außen- oder Innendurchmesser durch elastische Verformung verändert werden. Die herkömmliche Sicherung des Sprengringes in seiner Nut erfolgt allein durch die Federspannung. Die Federspannung reicht unter bestimmten Betriebsbedingungen jedoch oft nicht aus, um den Sprengring in seiner Nut zu halten.

Vielmehr kann es passieren, dass der Sprengring aus seiner Nut heraustritt und damit seine Funktion der axialen Fixierung nicht mehr übernehmen kann, was bedeutet, dass dies zu empfindlichen Schadensfällen führt.

Bekannt ist auch eine Anordnung zur Wellensicherung in einer WellenNabe-Verbindung, bei der die Welle eine Vielzahl von Sprengringen aufweist, die in in ihre Außenfläche eingeformten Nuten angeordnet sind. Die Nabe weist zur Aufnahme der Welle eine zentrale Innenbohrung auf, in deren Innenfläche eine Vielzahl von mit den Nuten für die Sprengringe der Welle korrespondierende Nuten eingebracht sind. Die Flanken der Nuten verlaufen zum Nutgrund hin konisch verjüngend. Die Montage- und Demontagekraft ist durch die Anzahl und die Kombination der Sprengringe bestimmt (JP 2007255659, JP 2007263161).

Ferner ist eine Antriebseinheit mit einer über einen Keil verbundenen Wellen-Naben-Verbindung bekannt, deren Nabe an ihrer Innenfläche eine umlaufende Nut aufweist. Die dem Keil zugewandte Flanke der Nut ist um einen Neigungswinkel a zur Oberkante der Nut hin abgeschrägt, so dass die Breite der Nut an ihrer Oberkante größer ist als die Breite des Nutgrundes (US 2005/0159227 A1)

Schließlich ist eine Vorrichtung zur Verhinderung des Auseinanderfallens eines Gleichlaufgelenks bekannt, bei der ein Haltering in einer Nut der Welle und einer mit dieser korrespondierenden Nut der Nabe angeordnet ist. Die dem aus der Nabe herausragendem Ende der Welle zugewandte Nutflanke weist einen Schrägungswinkel α > 0 und die dieser Nutflanke gegenüberliegende Nutflanke der Nabe einen Schrägungswinkel β ≥ α auf, so dass sich die Breite der Nut sowohl der Welle als auch der Nabe zum Nutgrund hin verringert (WO2006/080 A1).

Der vorliegenden Erfindung liegt daher die Aufgabe zugrunde, eine Sprengringsicherung an einer dauerhaften schwer lösbaren Verbindung von Wellen-Naben-Verbindungen zu schaffen, mittels der ein Austreten des Sprengringes aus der Ringnut verhindert wird, dies unter Beseitigung der beschriebenen Nachteile der bekannten Lösungen und bei einem vertretbaren Kostenaufwand.

Erfindungsgemäß wird diese Aufgabe mit den Merkmalen des Anspruches 1 gelöst.

Weitere Einzelheiten der Erfindung und besondere Ausführungen sind Gegenstand der Unteransprüche.

Gemäß der vorliegenden Erfindung wurde eine Sprengringsicherung an einer Wellen-Naben-Verbindung geschaffen, bei der die Welle, ausgebildet mit einem Wellenzapfen, und die Nabe in bekannter Weise auf ihrem äußeren Umfang bzw. in ihrer Bohrung mit einer Profilverzahnung ausgebildet sind, über die beim Fügen von Welle und Nabe sowohl eine kraft- als auch formschlüssige Verbindung geschaffen wird und diese Verbindung durch eine Sprengringsicherung zusätzlich gegen ein axiales Verschieben der gefügten Teile gesichert ist.

Zur Aufnahme des Sprengringes sind die Nabe und auch der Wellezapfen der Welle mit Nuten ausgebildet, in denen der Sprengring als Sicherungselement Aufnahme findet.

Dabei ist erfindungswesentlich, dass die beiden Seitenflächen der Nut der Nabe unter einem bestimmten Schrägungswinkel ausgebildet sind und somit der Nut in der Nabe eine trapezförmige Querschnittsform geben.

Die Seitenflächen der Nut in der Nabe verlaufen dabei so, dass sie zum Nutgrund jeweils nach außen hin schräg verlaufen, so dass der Nutgrund ein größeres Breitenmaß gegenüber dem Maß an der Trennungsfuge von Nabe und Wellenzapfen besitzt.

Ferner gehört zur Erfindung, dass die Tiefe der Nut in der Nabe gegenüber dem einzusetzenden Sprengring mit einem Maß ausgebildet ist, welches größer dem halben Dickenmaß vom Sprengring ist.
Bei Einsatz eines Sprengringes mit einem kreisrunden Querschnitt ist somit das Tiefenmaß größer als der Radius vom kreisrunden Querschnitt des Sprengringes.

Durch diese Anordnung und Ausbildung der Sprengringsicherung wird gewährleistet, dass im Endzustand der Naben-Wellenverbindung der Sprengring tiefer in der Nut der Nabe eingebunden ist, als gegenüber der Nut im Wellenzapfen. Hier kommt der wesentliche Vorteil der vorgestellten Sprengringsicherung zum Tragen, welche sichert, dass unter Betriebsbedingungen der Sprengring nicht aus der Nut der Nabe heraustreten kann, somit eine ausreichende axiale Sicherung einer Wellen-Naben-Verbindung gegeben ist.

Die vorgestellte Sprengringsicherung ist einsetzbar bei Wellen-Naben-Verbindungen, bei der die Welle zum einen mit einem Wellenzapfen ausgebildet ist, der durch mechanische Bearbeitung der Welle herausgebildet wird oder bei der die Welle mit einem Wellenzapfen bestückt ist, der als ein gesondertes Bauteil hergestellt und dann mit der Welle fest verbunden wird, um die Welle mit einer Nabe zu verbinden.

Die Profilverzahnungen, mit denen die Bohrung der Nabe und der äußere Umfang des Wellenzapfens ausgebildet sind, können in vielfältiger Form gestaltet sein, wobei bevorzugterweise eine Kerbverzahnung anzuwenden ist, dies wiederum bedingt unter Beachtung fertigungstechnischer und ökonomischer Aufwendungen.

Mit nachfolgendem Ausführungsbeispiel soll die Erfindung näher erläutert werden.

Die dazugehörigen Zeichnungen zeigen in
- Figur 1:: eine Naben-Wellen-Verbindung, teilweise im Schnitt,
- Figur 2:: eine vergrößerte Ansicht A nach Figur 1.

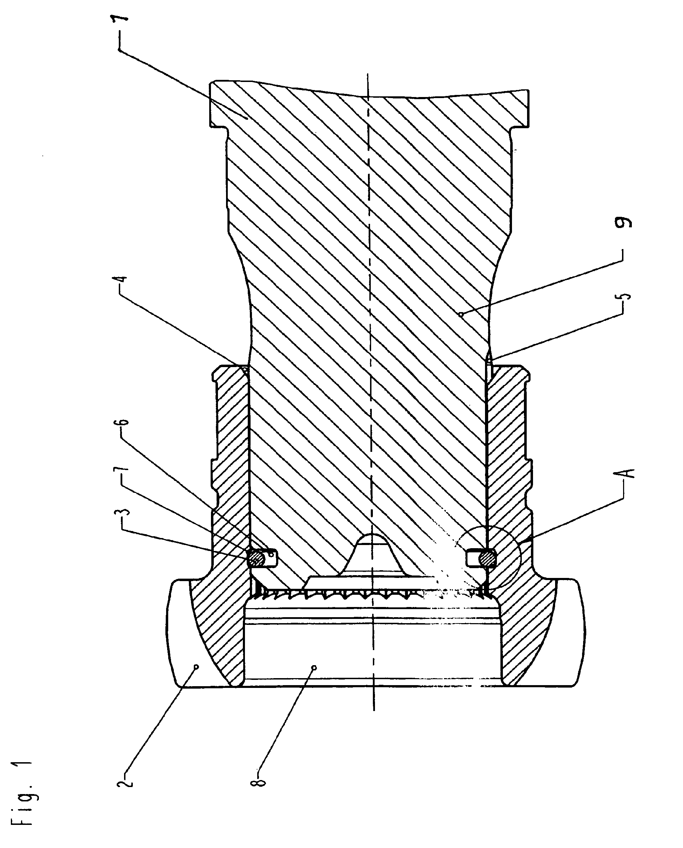

In der Figur 1 wird eine Wellen-Naben-Verbindung gezeigt, beispielsweise eine Verbindung einer Kardan-Welle mit der Nabe eines Gelenkes. Die Welle 1 kann dabei sowohl, wie in Figur 1 gezeigt, mit einem durch mechanische Bearbeitung ausgebildeten Wellenzapfen 9 ausgebildet sein oder aber der Wellenzapfen 9 ist ein gesondertes Bauteil, welches dann mit der Welle 1 fest verbunden wird.

Am äußeren Umfang des Wellenzapfens 9 ist dieser mit einem Außenprofil 5 ausgebildet. Die Nabe 2 besitzt eine zentrische Bohrung 8, in der ein Innenprofil 4 eingearbeitet und dabei in Form und Größe dem Außenprofil 5 angepasst ist, so dass die beiden Teile Welle 1 und Nabe 2, miteinander gefügt werden können, wodurch eine kraft- und formschlüssige Verbindung hergestellt wird.

Die axiale Sicherung dieser Verbindung erfolgt über die vorgestellte Sprengringsicherung derart, dass der Wellenzapfen 9 und die Nabe 2 mit Ringnuten 6; 7 ausgebildet sind, in denen der Sprengring 3 Aufnahme findet.

Soll die Verbindung zwischen Welle 1 und Nabe 2 hergestellt werden, wird ein handelsüblicher Sprengring 3 in die Ringnut des Wellenzapfens 9 eingesetzt. Die Nabe 2 wird sodann auf den Wellenzapfen 9 aufgesetzt, dies derart, dass das Innenprofil 4 und das Außenprofil 5 so zueinander stehen, dass die Erhebungen des einen Profils in Vertiefungen des anderen Profils eingreifen, wobei an der Stirnseite des Wellenzapfens 3 und der Stirnseite der Bohrung 8 der Nabe 2 Schrägen vorgesehen sind, die das Fügen von Welle 1 und Nabe 2 erleichtern und auch führend wirken.

Selbstverständlich kann dieser Montagevorgang auch so ausgeführt werden, dass die Nabe 2 auf den Wellenzapfen 9 der Welle 1 aufgesetzt und zu diesem positioniert wird.

Bei der Erreichung der Position, wenn die Ringnut 6 des Wellenzapfens 9 mit der Ringnut 7 der Nabe 2 deckungsgleich übereinander stehen, springt der vorgespannte Sprengring 3 im weitesten Sinne auseinander und kommt mit seinem äußeren Umfang im Nutgrund der Ringnut 7 von der Nabe 2 zum Anliegen.

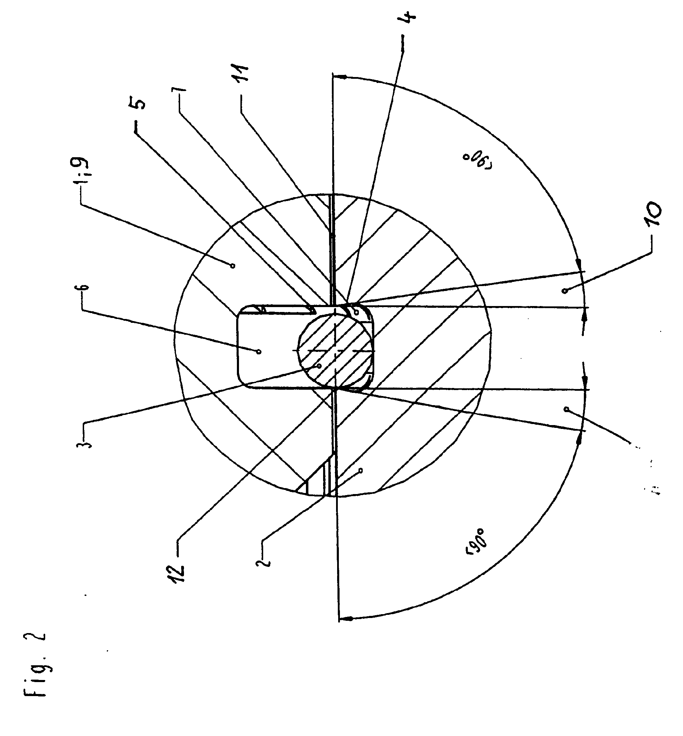

Diese Position des Sprengringes 3 ist in der Figur 2 in einer vergrößerten Darstellung wiedergegeben. Aus der Darstellung nach Figur 2 ergeben sich gleichfalls die Form der Ringnut 7 der Nabe 2 sowie die Endposition des Sprengringes 3, wenn Welle 1/Wellenzapfen 9 und Nabe 2 miteinander gefügt sind.

Die Ringnut 7 ist trapezförmig ausgebildet, indem die Seitenflächen der Ringnut 7 zum Nutgrund erweiternd ausgeführt sind, dies unter einem bestimmten Schrägungswinkel α, welcher mit der Bezugszahl 10 bezeichnet ist, wie in der Figur 2 gezeigt, aus der gleichfalls ersichtlich ist, wie der Sprengring 3 in den Ringnuten 6; 7 eingelagert ist.

Infolge der Ausbildung der Ringnut 7 mit einem Tiefenmaß, welches größer ist als das halbe Dickenmaß vom Sprengring 3 ist der Sprengring 3 in der Ringnut 7 so eingesetzt, dass sich an der Trennfuge 11 vom Wellenzapfen 9 und Nabe 2 im weitesten Sinne eine Kippkante 12 ergibt, welche sichert, dass bei axialer Belastung der Naben-Wellen-Verbindung der eingesetzte Sprengring 3 nicht aus der Ringnut 7 der Nabe 2 herausgedrückt wird und diese Kippkante 12 eine zusätzliche Lagesicherung des eingesetzten Sprengringes 3 bewirkt.

Die Schrägungswinkel 10 sind mit einem Winkelmaß von größer 1 ° ausgebildet, vorzugsweise weisen diese Schrägungswinkel 10 ein Neigungsmaß von 1 bis 10 ° auf.

Wie bereits oben ausgeführt, ist das Tiefenmaß der Ringnut 7 größer als die Hälfte des Dickenmaßes des Sprengringes 3, wobei sich die Maßdifferenzen aus den Abmaßen von Welle 1 bzw. Wellenzapfen 9 sowie Nabe 2 und dem Dickenmaß des Sprengringes 3 ergeben.

Die Differenz zwischen dem Tiefenmaß der Ringnut 7 und dem halben Dickenmaß des Sprengringes 3 liegt dabei im Zehntel-Millimeterbereich. Beim Einsatz eines Sprengringes 3 mit kreisrundem Querschnitt und einem Durchmesser von beispielsweise 2 mm beträgt die Differenz 0,2 bis 0,8 mm. Diese Maßdifferenz entspricht somit dem Höhenmaß der Kippkante 12.

## Patentansprüche

1. Sprengringsicherung an einer Wellen-Naben-Verbindung zur axialen Abstützung von miteinander rotierender Welle (1) und Nabe (2) mittels eines Sprengringes (3), der in Ringnuten (6; 7) vom Wellenzapfen (9) der Welle (1) und von der Nabe (2) eingesetzt ist, **dadurch gekennzeichnet,**
**dass** die Seitenflächen der Ringnut (7) der Nabe (2) einen bestimmten von der Außenkante der Ringnut zum Nutgrund hin nach außen verlaufenden Schrägungswinkel (10) aufweisen, der der Ringnut (7) einen trapezförmigen Querschnitt mit einem gegenüber ihrer Breite im Bereich der Trennfuge (11) von Wellenzapfen (9) und Nabe (2) breiteren Nutgrund verleiht und die Ringnut (7) der Nabe (2) ein Tiefenmaß besitzt, welches größer als das halbe radiale Dickenmaß des Sprengrings (3) ist, so dass die umlaufenden Kanten der Ringnut (7) der Nabe (2) an der Trennfuge (11) für den Sprengring (3) eine Kippkante (12) bilden, welche sichert, dass bei axialer Belastung der Naben-Wellen-Verbindung der eingesetzte Sprengring (3) nicht aus der Ringnut (7) der Nabe (2) herausgedrückt wird.

2. Sprengringsicherung nach Anspruch 1,
**dadurch gekennzeichnet,**
**dass** die Schrägungswinkel (10) der beiden gegenüber der Senkrechten zur Achse des Wellenzapfens (9)_schräg nach außen ausgestellten Seitenflächen der Ringnut (7), größer 1°, vorzugsweise 1 bis 10° betragen.

3. Sprengringsicherung nach den Ansprüchen 1 und 2,
**dadurch gekennzeichnet,**
**dass** das Tiefenmaß der Ringnut (7) 0,2 mm bis 0,8 mm größer ist als das halbe Dickenmaß des Sprengringes (3).

4. Sprengringsicherung nach einem der Ansprüche 1 bis 3,
**dadurch gekennzeichnet,**
**dass** die Bohrung (8) der Nabe (2) mit einem Innenprofil (4), der Wellenzapfen (9) mit einem Außenprofil (5) ausgebildet sind, vorzugsweise als Kerbverzahnung, somit im gefügten Zustand von Welle (1) und Nabe (2) eine kraft- und formschlüssige Verbindung hergestellt ist.

5. Sprengringsicherung nach Anspruch 4,
**dadurch gekennzeichnet,**
**dass** der Wellenzapfen (9) und die Bohrung (8) der Nabe (2) im Bereich des Außenprofils bzw. des Innenprofils (4) mit Führungsschrägen ausgebildet sind.

6. Sprengringsicherung nach einem der vorhergehenden Ansprüche,
**dadurch gekennzeichnet,**
**dass** der Wellenzapfen (9) fest mit der Welle (1) verbunden ist, dabei als ein externes Bauteil ausgeführt oder durch mechanische Bearbeitung der Welle (1) ausgebildet ist.

## Claims

1. Snap-ring protection at a shaft-hub-connection for axial support of jointly rotating shaft (1) and hub (2) with a snap ring (3) inserted in radial grooves (6; 7) of the shaft pin (9) of the shaft (1) and the hub (2), **characterised by**
the side areas of the radial groove (7) of the hub (2) having a specific slant angle (10) outwardly from the outer edge of the radial groove to the groove bottom, which gives the radial groove (7) a trapezoid cross-section with a groove bottom wider than its width in the area of the parting line (11) of the shaft pin (9) and hub (2) and the radial groove (7) of the hub (2) a depth that is larger than half the radial thickness of the snap ring (3), so that the circumfering edges of the radial groove (7) of the hub (2) form a tipping edge (12) for the snap ring (3) at the parting line (11), which ensures that the snap ring (3) inserted is not pushed from the radial groove (7) of the hub (2) under axial load on the hub-shaft-connection.

2. Snap-ring protection according to claim 1,
**characterised by**
the slant angle (10) of the two side areas of the radial groove (7) being slanted outwardly as compared to the vertical to the axis of the shaft pin (9) by more than 1°, preferably 1 to 10°.

3. Snap-ring protection according to claims 1 and 2,
**characterised by**
the depth of the radial groove (7) being 0.2 mm to 0.8 mm more than half the thickness of the snap ring (3).

4. Snap-ring protection according to one of claims 1 to 3,
**characterised by**
the bore (8) of the hub (2) being formed with an inner profile (4), the shaft pin (9) with an outer profile (5), preferably as spline, so that the joined condition of shaft (1) and hub (2) leads to a force- and form-locking connection.

5. Snap-ring protection according to claim 4,
**characterised by**
that the shaft pin (9) and the bore (8) of the hub (2) being formed with guide slants in the area of the outer profile or inner profile (4).

6. Snap-ring protection according to one of the above claims,
**characterised by**
the shaft pin (9) being firmly connected to the shaft (1), performed as an external component or formed by mechanical processing of the shaft (1).

## Revendications

1. Sûreté de circlip sur une liaison arbre-moyeu pour le soutien axial de l'arbre (1) et du moyeu (2) tournant ensemble au moyen d'un circlip (3) qui est inséré dans des rainures annulaires (6; 7) du tourillon (9) de l'arbre (1) et du moyeu (2), **caractérisée par le fait que**,
les surfaces latérales de la rainure annulaire (7) du moyeu (2) présentent un angle d'inclinaison (10) défini par le bord extérieur de la rainure annulaire vers le fond de rainure et allant vers l'extérieur, conférant à la rainure annulaire (7) une section transversale trapézoïdale avec un fond de rainure plus large dans la zone du joint de séparation (11) du tourillon d'arbre (9) et du moyeu (2) par rapport à sa largeur et la rainure annulaire (7) du moyeu (2) possédant une cote de profondeur supérieure à la moitié de la cote d'épaisseur radiale du circlip (3) de telle sorte que les bords circulaires de la rainure annulaire (7) du moyeu (2) sur le joint de séparation (11) forment une arête de basculement (12) pour le circlip (3), empêchant, en cas de charge axiale de la liaison moyeu-arbre, que le circlip inséré (3) puisse sortir de la rainure annulaire (7) du moyeu (2).

2. Sûreté de circlip conformément à la revendication n°1, **caractérisée par le fait que**,
l'angle d'inclinaison (10) des deux surfaces latérales de la rainure annulaire (7) inclinées vers l'extérieur par rapport à la verticale à l'axe du tourillon d'arbre (9), est supérieur à 1° et se situe, de préférence, entre 1 et 10°.

3. Sûreté de circlip conformément aux revendications n° et n°2,
**caractérisée par le fait que**,
la cote de profondeur de la rainure annulaire (7), comprise entre 0,2 mm et 0,8 mm, est supérieure à la moitié de la cote d'épaisseur du circlip (3).

4. Sûreté de circlip conformément à l'une des revendications n°1 à à n°3, **caractérisée par le fait que**,
le trou (8) du moyeu (2) est constitué d'un profilé intérieur (4) et le tourillon d'arbre (9) d'un profilé extérieur (5), de préférence comme denture à cannelures, un raccordement robuste et solidaire pour une grande stabilité étant ainsi établi à l'état assemblé de l'arbre (1) et du moyeu (2).

5. Sûreté de circlip conformément à la revendication n°4,
**caractérisée par le fait que**,
le tourillon d'arbre (9) et le trou (8) du moyeu (2) dans la zone du profilé extérieur et/ou du profilé intérieur (4) est constitué d'entailles de guidage.

6. Sûreté de circlip conformément à l'une des revendications précédentes, **caractérisée par le fait que**,
le tourillon d'arbre (9) est assemblé de façon fixe avec l'arbre (1), réalisé comme module externe ou formé par un usinage mécanique de l'arbre (1).
